# EUROPEAN PATENT APPLICATION

(11) **EP 3 885 235 A1**
(43) Date of publication of application: **29.09.2021**
(21) Application number: 21161487.0
(22) Date of filing: 09.03.2021
(51) Int. Cl.: B62B 5/00, B62B 5/06, B62B 5/04, B62B 3/00

(54) **CART UNIT AND METHOD OF CONTROLLING THE SAME**

(30) Priority: 25.03.2020 KR 20200036262
(71) Applicant: LG Electronics Inc., Seoul 07336 (KR)
(72) Inventor: KOH, Sunggyu, 06772 Seoul (KR); LEE, Soomi, 06772 Seoul (KR); LEE, Younsung, 06772 Seoul (KR); LEE, Minjong, 06772 Seoul (KR); SON, Hyojun, 06772 Seoul (KR)
(74) Representative: Vossius & Partner Patentanwälte Rechtsanwälte mbB

(57) **Abstract**

The present disclosure relates to a cart unit and a method of controlling the same. The cart unit includes a touch sensor that is mounted inside a handle to sense an object such as a user's hand approaching the handle, and a controller that calculates operation information according to information sensed by the touch sensor. The cart unit may be operated according to the calculated operation information. This may result in improving user convenience.

## Description

### TECHNICAL FIELD

The present disclosure relates to a cart unit and a method of controlling the same. More particularly, the present disclosure relates to a cart unit that can be controlled according to a distance between a user and the cart unit or depending on whether the cart unit is gripped by the user, and a method of controlling the same.

### BACKGROUND

A toddler refers to a young child. Since toddlers have not completed their growth and development, they can be easily injured by external force.

For this reason, a variety of devices for protecting the toddlers when at home and outside are popularly sold.

For example, a stroller or baby carriage is widely used when going out with a toddler. A space in which a toddler or small child can ride is provided in a stroller. The toddler seated in the space can be transported as the stroller is moved by force applied by a user.

Safety of toddlers has to be the top priority of any stroller. That is, strollers are provided for the purpose of transporting toddlers, but this is based on the premise that toddlers seated therein are safe.

In general, a stroller includes wheels that can be rolled on the ground. The stroller should not be arbitrarily moved without manipulation of the user not only on a flat ground, but also on an inclined ground.

Korean Laid-Open Patent Application No. 10-2017-0097433, which is hereby incorporated by reference, discloses a stroller that can be automatically braked according to a distance with a parent or caregiver. In that publication, a sensing device provided on a handle can recognize a caregiver or measure a distance with the caregiver, and a braking device can be controlled according to a result of the recognition or measurement.

However, in such a stroller, since the braking device is controlled according to a distance with a caregiver, the braking device can be released when the caregiver is located nearby even if the caregiver is not holding the handle of the stroller. That is, in that publication, a method for preventing a safety accident that may occur as the braking device is released when a user is located adjacent to the stroller on a slope or downhill is not provided.

Korean Laid-Open Patent Application No. 10-2012-0062554, which is hereby incorporated by reference, discloses a stroller equipped with a safety device. In detail, as a handle mounting portion is provided with a touch sensor, an infrared sensor, and the like, the touch sensor can detect whether the handle is touched by a user, and the infrared sensor can detect a distance between the user and the handle.

However, since the touch sensor and the infrared sensor are required to be installed separately or additionally, arrangement and wiring structures may be complicated.

In addition, as the touch sensor is configured as a capacitive touch sensor, hands of the user can be sensed only when the user grips the handle with bare hands. That is, when the user holds the handle with gloves on, due to a weather condition and the like, the touch sensor may not properly detect whether the handle is gripped by the user.

Moreover, as the touch sensor and the infrared sensor are exposed to the outside of the handle, they may be easily contaminated by an external environment such as rain or snow, causing an error or malfunction.

### [Related Art Document]

### [Patent Document]

Korean Laid-Open Patent Application No. 10-2017-0097433 (August 28, 2017)
Korean Laid-Open Patent Application No. 10-2012-0062554 (June 14, 2012)

### SUMMARY

The present disclosure describes a cart unit that can solve the aforementioned problems, and a method of controlling the same.

The present disclosure also describes a cart unit that can safely protect a baby seated in a stroller, and a method of controlling the same.

The present disclosure also describes a cart unit that can accurately determine whether a handle is gripped by a user, and a method of controlling the same.

The present disclosure also describes a cart unit that can be operated or stopped by various motions taken by a user, and a method of controlling the same.

The present disclosure also describes a cart unit that can prevent a sensing member configured to sense a user from being damaged by an external environment, and a method of controlling the same.

The present disclosure also describes a cart unit that can provide a high degree of design freedom of a handle that is gripped by a user, and a method of controlling the same.

According to one aspect of the subject matter described in this application, a cart unit includes: a base portion that extends in one direction; main wheels rotatably coupled to a lower part of the base portion; a motor connected to the main wheels and rotated together with the main wheels; a vertical portion that extends from an upper part of the base portion in an up-and-down direction; a handle rotatably coupled to an upper part of the vertical portion; a touch sensor mounted inside the handle to sense information regarding a distance between the handle and an object, or information regarding whether the object is in contact with the handle; and a controller that is electrically connected to the motor and the touch sensor, receives the sensed information, and calculates operation information regarding rotation of the motor using the received information.

Implementations according to this aspect may include one or more of the following features. For example, the handle may include a connection portion rotatably coupled to the vertical portion and an extended portion that is continuous with the connection portion and extends in one direction. The touch sensor may extend in the one direction in which the extended portion extends and is mounted inside the extended portion.

In some implementations, the touch sensor may include a plurality of sensing regions disposed along the one direction.

In some implementations, the touch sensor may be located closer to an inner upper part of the extended portion.

In some implementations, the controller may include a distance information calculation module configured to calculate distance information regarding the distance between the handle and the object, and a motion information calculation module configured to calculate motion information regarding movement of the object by using variations of the calculated distance information.

In some implementations, the controller may further include an operation information calculation module configured to calculate operation information regarding operation of the cart unit by using the calculated distance information or the calculated motion information.

In some implementations, the cart unit may further include a brake that inhibits rotation of the main wheels. The controller may further include a brake control module configured to control the brake using the calculated operation information.

In some implementations, the operation information calculation module may calculate operation information for controlling the brake to be operated when the calculated distance information is greater than preset reference distance information.

In some implementations, the operation information calculation module may calculate operation information for controlling the brake to be operated or released when the calculated motion information corresponds to preset reference motion information.

In some implementations, the controller may include a touch information calculation module configured to calculate touch information regarding whether the object is in contact with the handle, and an operation information calculation module configured to calculate operation information regarding rotation of the motor by using the calculated touch information.

In some implementations, the touch information calculation module may include a contact number information calculation unit configured to calculate information regarding the number of portions where the object is in contact with the handle.

In some implementations, the operation information calculation module may calculate operation information for controlling the motor to be rotated when the calculated contact number information is less than preset reference contact number information.

In some implementations, the cart unit may further include a brake that inhibits rotation of the main wheels. The controller may further include a brake control module configured to control the brake using the calculated operation information. The operation information calculation module may calculate operation information for controlling the brake to be operated when the calculated contact number information is greater than preset reference contact number information.

According to another aspect, a method of controlling a cart unit includes the steps of: (a) sensing, by a touch sensor, information regarding a distance between a handle and an object or information regarding whether the object is in contact with the handle; (b) controlling, by a controller, operation of the cart unit using the sensed information regarding the distance between the handle and the object; (c) controlling, by the controller, the operation of the cart unit using the sensed information regarding whether the object is in contact with the handle.

Implementations according to this aspect may include one or more of the following features. For example, the step (a) may include: (a1) sensing, by the touch sensor, the distance between the handle and the object; (a2) sensing, by the touch sensor, information regarding whether the object is in contact with the handle; (a3) detecting, by the touch sensor, a sensing region in contact with the object among a plurality of sensing regions; and (a4) transmitting, by the touch sensor, information regarding the sensed distance between the handle and the object or information regarding the detected sensing region in contact with the object to the controller.

In some implementations, the step (b) may include: (b1) calculating, by a distance information calculation module, distance information regarding a distance between the handle and the object; (b2) calculating, by a motion information calculation module, motion information regarding movement of the object using the calculated distance information; (b3) comparing, by an operation information calculation module, the calculated motion information with preset reference motion information; (b4) calculating, by the operation information calculation module, operation information for controlling a brake to be operated or released when the calculated motion information corresponds to the reference motion information; and (b5) controlling, by a brake control module, the brake to be operated or released according to the calculated operation information.

In some implementations, the step (b) may include, after the step (b1) and before the step (b5): (b3') comparing, by the operation information calculation module, the calculated distance information with preset reference distance information; and (b4') calculating, by the operation information calculation module, operation information for controlling the brake to be operated when the calculated distance information is greater than the reference distance information.

In some implementations, the step (c) may include: (c1) calculating, by a touch information calculation module, touch information regarding whether the object is in contact with the handle; (c2) calculating, by a contact number information calculation unit, contact number information regarding the number of portions where the object is in contact with the handle; (c3) comparing, by an operation information calculation module, the calculated contact number information with preset reference contact number information; (c4) calculating, by the operation information calculation module, the operation information for controlling a brake to be operated when the calculated contact number information is greater than the preset reference contact number information; and (c5) controlling, by a brake control module, the brake to be operated according to the calculated operation information.

In some implementations, the step (c) may include, after the step (c3): (c6) calculating, by the operation information calculation module, the operation information for controlling the motor to be rotated when the calculated contact number information is less than or equal to the reference contact number information; and (c7) controlling, by a motor control module, the motor to be rotated according to the calculated operation information.

The implementations of the present disclosure may provide at least one or more of the following benefits.

First, a cart unit includes a touch sensor. The touch sensor provided in a handle may sense information regarding a distance between the handle and hands of a user, and information regarding whether the handle is gripped by the hands of the user. The sensed information may be transmitted to a controller to calculate distance information, touch information, and motion information.

Using the calculated information, the controller may calculate operation information that releases a brake to allow rotation of main wheels only when it is calculated that the handle is gripped by the user.

As the cart unit is operated only when the handle is gripped by the user, safety of a baby on board may be ensured.

In addition, the touch sensor includes a plurality of sensing regions. The plurality of sensing regions may be disposed side by side in a continuous manner or to be spaced apart from one another along an extension direction of the touch sensor. The plurality of sensing regions may individually detect whether the handle is gripped by the hands of the user.

Information detected by the plurality of sensing regions may be transmitted to the controller, so as to be calculated as contact number information regarding the number of regions in contact with an object and contact position information regarding a region in contact with the object. The controller may calculate that the handle is gripped by the hands of the user only when the calculated contact number information is less than preset reference contact number information.

Accordingly, an object in contact with the handle alone is not enough to make the cart unit travel, that is, the cart unit may be operated only when it is determined that the handle is gripped by the hands of the user.

In some implementations, the touch sensor includes a plurality of sensing regions. The plurality of sensing regions may be disposed side by side in a continuous manner or to be spaced apart from one another along an extension direction of the touch sensor. The plurality of sensing regions may individually detect whether the handle is gripped by the hands of the user. The sensed information may be mapped to a detection time point.

Information sensed by the plurality of sensing regions may be transmitted to the controller, so as to be calculated as motion information regarding changes in a relative position between the hands of the user and the handle. When the calculated motion information corresponds to preset reference motion information, the controller may calculate operation information for controlling the cart unit to be operated according to a preset manner.

Accordingly, the user can easily control operation of the cart unit by changing the relative position between the his or her hands and the handle.

In addition, the touch sensor may be accommodated in the handle. A space for accommodating the touch sensor may be formed inside the handle. The touch sensor may extend in one direction, and the handle may include an extended portion that extends longer in the one direction than the touch sensor. The touch sensor may be mounted to an inner space of the extended portion.

As the touch sensor is not exposed to the outside of the handle, contamination or a malfunction of the touch sensor, due to an external environment, may be prevented. In addition, information sensing accuracy of the touch sensor may be increased.

Also, as the touch sensor is accommodated in the inner space of the handle, changing a shape of an external structure of the handle may not be required. Further, the user may not feel a sense of disapproval or foreignness which may arise when the touch sensor is exposed to an outside of the handle.

This may provide a high degree of design freedom with regard to the handle, and result in improving convenience and comfort of the user when gripping the handle.

### BRIEF DESCRIPTION OF THE DRAWINGS

FIG. 1 is a perspective view illustrating an example of a smart stroller;
FIG. 2 is a perspective view illustrating a state in which a baby seat unit and a cart unit of the smart stroller of FIG. 1 are separated from each other;
FIG. 3 is a perspective view of the cart unit provided in the smart stroller of FIG. 1;
FIG. 4 is a perspective view of a touch sensor provided in the smart stroller of FIG. 1;
FIG. 5 is a cross-sectional view of the touch sensor and a handle of FIG. 4;
FIG. 6 is a partially-cut plan view illustrating the touch sensor of FIG. 4;
FIG. 7 is a plan view of the touch sensor of FIG. 4;
FIG. 8 is a block diagram illustrating a configuration for implementing an example method of controlling a smart stroller;
FIG. 9 is a flowchart illustrating the method of controlling the smart stroller;
FIG. 10 is a flowchart illustrating a detailed flow of a step S100 in the method of controlling the smart stroller of FIG. 9;
FIG. 11 is a flow chart illustrating a detailed flow of a step S200 in the method of controlling the smart stroller of FIG. 9;
FIG. 12 is a flowchart illustrating a detailed flow of a step S300 in the method of controlling the smart stroller of FIG. 9;
FIG. 13 is a schematic view illustrating a state in which the touch sensor of FIG. 4 is touched by a user;
FIG. 14 is a schematic view illustrating a process of sensing a distance between the touch sensor of FIG. 4 and a hand of a user;
FIG. 15 is a schematic view illustrating one example in which the touch sensor of FIG. 4 is manipulated by a user to perform a preset operation; and
FIG. 16 is a schematic view illustrating another example in which the touch sensor of FIG. 4 is manipulated by a user to perform a preset operation.

### DETAILED DESCRIPTION

Hereinafter, one or more examples of a cart unit and a method of controlling the same will be described in detail with reference to the accompanying drawings.

In the following description, description of several components will be omitted in order to clarify the technical features of the present disclosure.

### 1. Definition of Terms

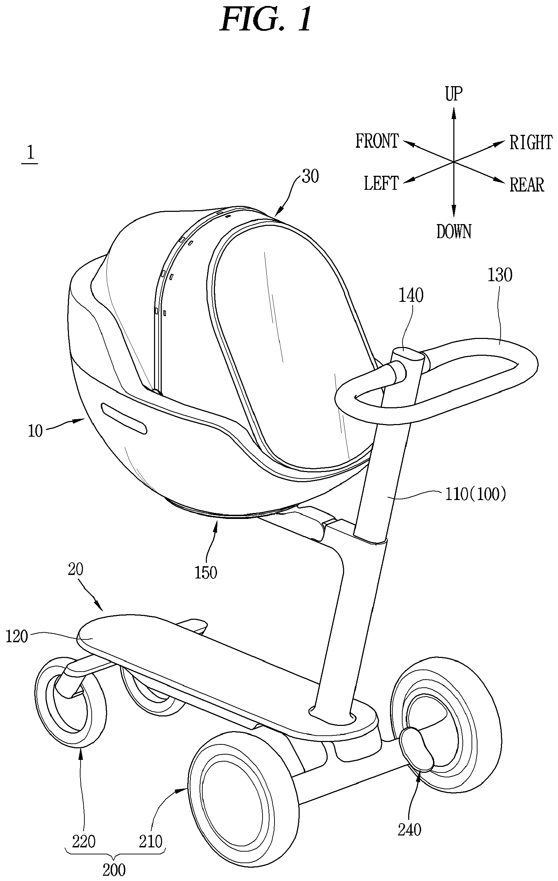

The terms "front side (or part)", "rear side", "left side", and "right side", "upper side", and "lower side" as used herein will be understood with reference to a coordinate system shown in FIG. 1. It will be understood that these directions are set based on a traveling or moving direction of a smart stroller 1.

The term "infant" used herein refers to a very young child who cannot walk completely independently. For example, an infant can be used to refer to any child under a year old.

The term "toddler" used herein refers to young child who is learning or has recently learned to walk, or can be transported with a baby carriage or the like even if he or she is capable of walking independently. For example, a toddler can be used to refer to any child from 1 to 4 years old.

Hereinafter, the "infant" and "toddler" will be collectively referred to as a "baby", an encompassing term for infants and toddlers.

The term "seat unit" used herein refers to an object having a space in which infants or toddlers can ride or seat. In some implementations, the seat unit may be detachably coupled to a cradle unit provided in a vehicle, or a cart unit that can travel independently.

The term "electrical connection" may be used when two or more members are connected in a manner of allowing an electrical signal, power, and the like to be transmitted. For example, the electrical connection may be achieved in a wired or wireless manner.

The term "object" used herein refers, for example, to a user or hands of the user.

### 2. Description of Configuration of Example Smart Stroller 1

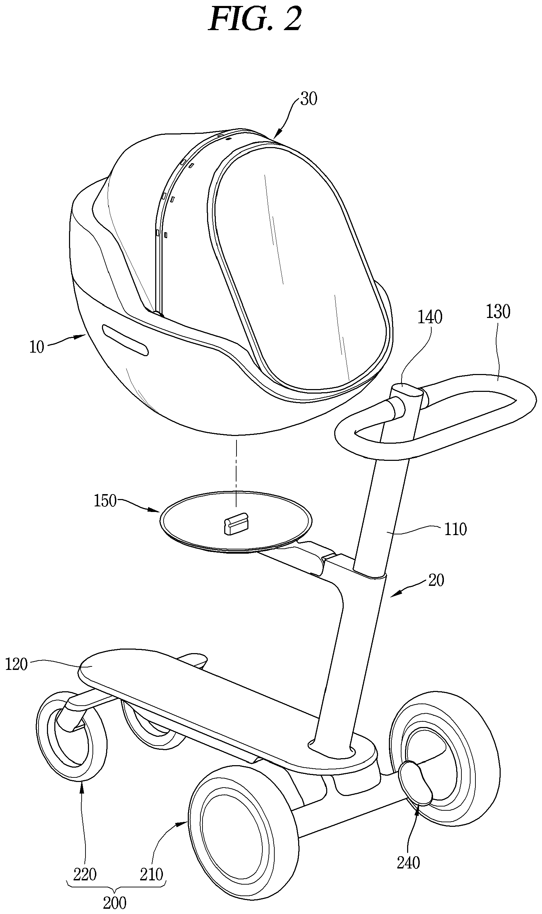

FIG. 1 illustrates a state in which a baby seat unit (or stroller seat) 10 is coupled to a cart unit (or cart) 20, and FIG. 2 illustrates a state in which the baby seat unit 10 is separated from the cart unit 20. The smart stroller 1 may be configured by a combination of the baby seat unit 10 and the cart unit 20.

In the depicted example, the baby seat unit 10 may be coupled to the cart unit 20 in a detachable manner. This may be achieved by an elastic force applied by a spring (not shown) or the like.

In some implementations, the baby seat unit 10 that is detachably coupled to the cart unit 20 may be electrically connected to the cart unit 20. Accordingly, power supplied from a battery (not shown) of the cart unit 20 may be transmitted to the baby seat unit 10.

The cart unit 20 may travel indoors or outdoors. In detail, the cart unit 20 may travel indoors or outdoors as a wheel part 200 is rotated by force applied by a user through a handle 130.

Hereinafter, the constituting components (or components) of the smart stroller 1 will be described in detail with reference to the accompanying drawings.

### (1) Description of Baby Seat Unit 10

As illustrated in FIGS. 1 and 2, the smart stroller 1 includes the baby seat unit 10.

The baby seat unit 10 has a substantially sphere shape with an open upper side or part. Lower and front sides of the baby seat unit 10 are rounded.

The upper side of the baby seat unit 10 is open. A baby may be accommodated in the baby seat unit 10 through the open side.

The baby seat unit 10 may be provided therein with a predetermined space in which a baby is accommodated. A cushion made of a soft material may be provided at front and lower sides of the predetermined space.

In the depicted example, the baby seat unit 10 has a symmetrical shape. Accordingly, there may be no distinction between the left and right directions of the baby seat unit 10. This may result in improving user convenience.

As illustrated in FIG. 2, the baby seat unit 10 may be detachably coupled to the cart unit 20. When the baby seat unit 10 is coupled to the cart unit 20, the baby seat unit 10 may be electrically connected to the cart unit 20.

This is under the premise that the baby seat unit 10 is moved while a baby is seated thereon. That is, in order to reduce weight of the baby seat unit 10, a battery and the like for electrical connection may be provided in the cart unit 20.

In addition, an air cover 30 may be detachably coupled to the baby seat unit 10. The air cover 30 may filter air flowing into the inner space of the baby seat unit 10 through physical and electrostatic attraction.

Accordingly, air from which fine dust and the like have been removed is introduced into the inner space of the baby seat unit 10, allowing the baby to inhale clean air.

### (2) Description of Cart Unit 20

As illustrated in FIGS. 1 and 2, the smart stroller 1 includes the cart unit 20.

The cart unit 20 may travel indoors or outdoors. This is achieved by the wheel part 200 provided at the cart unit 20.

The baby seat unit 10 may be detachably coupled to the cart unit 20. More specifically, the baby seat unit 10 is detachably coupled to a seat support portion 150 of the cart unit 20.

The baby seat unit 10 placed on the cart unit 20 may receive power from the cart unit 20. Accordingly, it may be considered that the baby seat unit 10 is eclectically connected to the cart unit 20.

The cart unit 20 may include a battery (not shown). The battery (not shown) supplies power for operating the cart unit 20. In some implementations, a motor and the like accommodated in the cart unit 20 may be operated by the battery (not shown) in response to a signal applied to a display 140 located adjacent to the handle 130.

In addition, the battery (not shown) may supply power to the baby seat unit 10 that is electrically coupled to the cart unit 20. This may allow an air cleaning module (not shown) or an LED (not shown) provided in the baby seat unit 10 to emit light.

In the depicted example, the cart unit 20 includes a body part (or body) 100 and the wheel part 200.

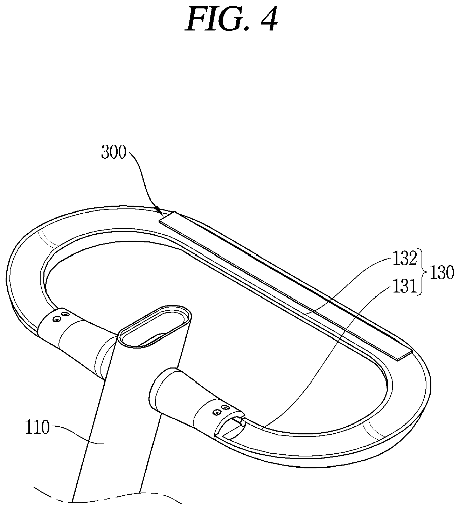

Referring to FIGS. 4 to 7 and FIG. 12, the cart unit 20 further includes a touch sensor 300 and a controller 400.

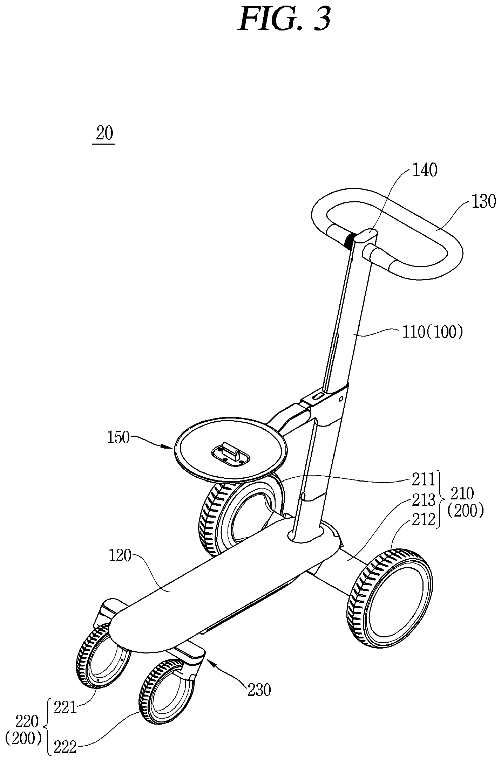

Hereinafter, the constituting elements (components) of the cart unit 20 will be described with reference to FIGS. 3 to 4, but the touch sensor 300 and the controller 400 will be described separately.

### 1) Description of Body Part 100

The body part 100 defines a body structure (or framework) of the cart unit 20. The body part 100 is a portion of the cart unit 20 that is exposed to the outside. Accordingly, each corner of the body part 100 may be chamfered to prevent the user from being injured.

The body part 100 may be made of a material that is lightweight and high rigidity (or stiffness). In some implementations, the body part 100 may be made of reinforced plastics.

The body part 100 may include a vertical portion 110, a base portion 120, the handle 130, the display 140, and the seat support portion 150.

The vertical portion 110 defines a vertical body structure of the body part 100. The vertical portion 110 extends in a direction toward the ground and a direction away from the ground, namely, in an up-and-down direction of the illustrated example.

The vertical portion 110 may extend in the up-and-down direction to be inclined or tilted with respect to the ground by a predetermined angle. In some implementations, the vertical portion 110 may extend to be inclined toward a direction in which the user holds or grips the handle 130, that is, the vertical portion 110 may extend to be inclined rearward in the illustrated example. Alternatively, the vertical portion 110 may extend perpendicular to ground, i.e. with an inclination angle of 0° .

Accordingly, the vertical portion 110 may extend to be inclined toward the user to thereby enhance user convenience.

The vertical portion 110 may have a polygonal prism shape with a predetermined thickness. In the depicted example, the vertical portion 110 has a square prism shape that has a cross section with a longer side in a front-and-rear (or back-and-forth) direction and a shorter side in a left-and-right direction.

Each corner of the vertical portion 110 may be chamfered or rounded. This may prevent the user from being injured by the vertical portion 110.

The base portion 120 is coupled to one side of the vertical portion 110 that faces the ground, namely, the lower side in the illustrated example. In some implementations, the vertical portion 110 may be folded in a direction to the base portion 120.

Accordingly, a space occupied by the cart unit 20 may be minimized while not in use.

The handle 130 is coupled to another side of the vertical portion 110 that is directed opposite to the ground, namely, the upper side in the illustrated example. In some implementations, the handle 130 may be rotatably couped to the vertical portion 110.

Accordingly, the handle 130 may be rotated according to a body shape of the user and be adjusted to an angle that is most suitable for the user to hold.

An elevating portion (no reference numeral) that is connected to the seat support portion 150 is penetratingly coupled to one position of the vertical portion 110 that is located between the base portion 120 and the handle 130.

The elevating portion may be moved in a direction toward the handle 130 or a direction away from the handle 130 while being coupled to the vertical portion 110. In other words, the elevating portion may be moved in the up-and-down direction while being coupled to the vertical portion 110.

Accordingly, the user may adjust a height of the baby seat unit 10 by adjusting a height of the elevating portion.

The base portion 120 defines a lower body structure of the cart unit 20 in a horizontal direction. The base portion 120 extends in a direction toward and away from the vertical portion 110, namely, in the front-and-rear direction in the illustrated example.

In some implementations, the base portion 120 may horizontally extend with respect to the ground. Accordingly, the user may put personal belongings like a bag on the base portion 120.

The base portion 120 may have a board (or plate) shape. In the depicted example, front and rear corners of the base portion 120 are rounded. The base portion 120 may have a shape that allows the vertical portion 110 to be coupled thereto and allows the wheel part 200 to be rotatably coupled thereto.

Accordingly, personal belongings and the like carried by the user may be put and placed on the base portion 120.

Each corner of the base portion 120 may be chamfered or rounded. This may prevent the user from being injured by the corners of the base portion 120.

The vertical portion 110 is coupled to one side of the base portion 120 that faces the vertical portion 110, namely, to the upper rear side in the illustrated example.

A main wheel support portion 213 is coupled to another side of the base portion 120 that is directed opposite to the vertical portion 110, namely, to the lower rear side in the illustrated example. In addition, a sub wheel support portion 223 to be described hereinafter is rotatably coupled to the another side of the base portion 120, namely, the lower front side in the illustrated example.

The handle 130 is a portion gripped by the user to enable the cart unit 20 to travel. The user may push or pull the handle 130 to make the cart unit 20 move forward or backward.

The handle 130 is disposed at the vertical portion 110. In detail, the handle 130 is located at one side of the vertical portion 110 opposite to the base portion 120, namely, at the upper side in the illustrated example.

The handle 130 may be rotatably coupled to the vertical portion 110. Accordingly, the user may rotate the handle 130 according to his or her height to comfortably hold the handle 130. In addition, the user may rotate the handle 130 toward the front side of the vertical portion 110 to reduce volume of the cart unit 20 while not in use.

A predetermined space is formed inside the handle 130. The touch sensor 300 to be described hereinafter may be disposed in the space of the handle 130.

The handle 130 includes a connection (or connecting) portion 131 and an extended portion 132.

The connection portion 131 is a portion of the handle 130 that is rotatably connected to the vertical portion 110. The connection portion 131 is continuous with the extended portion 132.

The connection portion 131 may be provided in plurality. Each of the plurality of connection portions 131 may extend from the vertical portion 110 and the extended portion 132. In the depicted example, two connection portions 131 are disposed to face each other with the vertical portion 110 interposed therebetween.

In other words, the connection portions 131 are rotatably coupled to left and right sides of the vertical portion 110, respectively.

The connection portions 131 may be formed in a rounded shape.

In the illustrated example, a front side of the connection portion 131 extends toward the vertical portion 110 so as to be coupled to the vertical portion 110. A rear side of the connection portion 131 extends toward the extended portion 132 so as to be continuous with the extended portion 132.

Portions or parts of the connection portion 131 located between the front side and the rear side of the connection portion 131 are convexly rounded in a direction away from the vertical portion 110.

That is, in the illustrated example, a part of the connection portion 131 located at the right side is rounded to be convex toward the right, and a part of the connection portion 131 located at the left side is rounded to be convex toward the left.

A predetermined space is formed inside the connection portion 131. In other words, the connection portion 131 is empty inside. Accordingly, weight of the connection portion 131 may be reduced, and stiffness against pressure applied in the front-and-rear direction may be increased.

The extended portion 132 extends between the rear sides of the connection portions 131 that face each other.

The extended portion 132 is a portion where the handle 130 extends at a predetermined angle with respect to a traveling direction of the cart unit 20. In some implementations, the extended portion 132 may extend in the left-and-right direction so as to be perpendicular to the traveling direction of the cart unit 20.

The extended portion 132 is continuous with the connection portions 131. The extended portion 132 may extend between rear ends of the connection portions 131 that face each other.

A predetermined space is formed inside the extended portion 132. In other words, the extended portion 132 is empty inside. Accordingly, weight of the extended portion 132 may be reduced, and stiffness against pressure applied in the front-and-rear direction may be increased.

The touch sensor 300 may be mounted to the space of the extended portion 132. The touch sensor 300 may detect an object adjacent to the extended portion 132, for example, a hand of the user. A detailed description thereof will be given later.

The display 140 is located adjacent to the handle 130.

The display 140 is a portion through which the user inputs a control signal for controlling the smart stroller 1. In addition, the display 140 may output a control signal that is input by the user and a result of controlling the smart stroller 1 according to the input control signal as visual information, etc.

Accordingly, the display 140 may be also referred to as a user interface (Ul) module.

The display 140 may be configured as any form that can receive a control signal from the user. In some implementations, the display 140 may be configured as a touch panel, a push button, or the like.

The display 140 may be configured as any form that can output visual information. In some implementations, the display 140 may be configured as an LED lamp, an LED panel, an LCD lamp, an LCD panel, and the like.

The display 140 is disposed at the vertical portion 110. In the depicted example, the display 140 is located at an upper end of the vertical portion 110. As the display 140 is located between the connection portions 131 of the handle 130, the user may easily manipulate the display 140 or identify displayed visual information.

The seat support portion 150 is a portion where the baby seat unit 10 is detachably coupled to the cart unit 20. The seat support portion 150 supports the lower side of the baby seat unit 10.

The seat support portion 150 is electrically connected to the baby seat unit 10. The baby seat unit 10 placed on the seat support portion 150 may be electrically connected to the cart unit 20.

The seat support portion 150 is electrically connected to a battery (not shown) provided in the cart unit 20. The electrical connection may be achieved by a conductor member (not shown) or the like.

Accordingly, power supplied by the battery (not shown) may be transferred to the baby seat unit 10 through the seat support portion 150.

The seat support portion 130 is located at one side of the vertical portion 110 opposite to the handle 130, namely, at the front side in the illustrated example. That is, the baby seat unit 10 placed on the seat support portion 150 may be located at the front side of the user who manipulates the cart unit 20.

Thus, the user can see his or her baby in the baby seat unit 10 while manipulating the cart unit 20.

The seat support portion 150 is coupled to the vertical portion 110 by a coupling member (no reference numeral). In some implementations, the coupling member may be rotated in a direction toward the vertical portion 110.

Accordingly, the seat support portion 150 may also be rotated toward the vertical portion 110. This may allow a space occupied by the cart unit 20 to be reduced while not in use.

The seat support portion 150 may be made of a lightweight and high rigidity material. In some implementations, the seat support portion 150 may be made of reinforced plastics.

The seat support portion 150 may have a shape that can securely support the baby seat unit 10 placed thereon. In the depicted example, the seat support portion 150 is formed as a part of a spherical surface that is convex downward.

This is due to the lower side of the baby seat unit 10 that is placed on the seat support portion 150 has a spherical shape. A shape of the seat support portion 150 may vary depending on a shape of the lower side of the baby seat unit 10.

### 2) Description of Wheel Part 200

As illustrated in FIGS. 3 and 4, the smart stroller 1 includes the wheel part 200.

The wheel part 200 is provided at the cart unit 20 in a rotatable manner. As the wheel part 200 is rotated, the cart unit 20 may be rotated to the front, rear, left, or right side.

The wheel part 200 may be configured as any form that can be rotated and rolled. In some implementations, the wheel part 200 may be configured as wheels.

The wheel part 200 may be provided in plurality. In the depicted example, the wheel part 200 includes a main wheel 210 located on the rear side and a sub wheel 220 located on the front side.

That is, in the illustrated example, the wheel part 200 includes the main wheel 210, the sub wheel 220, a motor 230, and a brake 240.

The main wheel 210 is rotatably coupled to a lower rear side of the base portion 120. The main wheel 210 supports the rear side of the cart unit 20.

The main wheel 210 may be connected to the motor 230. The motor 230 may be rotated according to a control signal input by the user, or a direction and strength of force that the user pushes or pulls the handle 130. The motor 230 may be rotated according to a traveling condition or environment of the cart unit 20.

In detail, when the cart unit 20 travels uphill, the motor 230 may be operated such that the main wheel 210 is rotated in a direction toward the front side. When the cart unit 20 travels downhill, the motor 230 may be operated such that the main wheel 210 is rotated in a direction toward the rear side.

Accordingly, strength of force required for the user to push the handle 130 to cause the cart unit 20 to travel or move may be reduced. Further, a safety incident or accident due to arbitrary operation of the cart unit 20 may be prevented.

The main wheel 210 may be provided in plurality. In the depicted example, the main wheel 210 includes a first main wheel 211 located on the right side and a second main wheel 212 located on the left side.

The main wheel 210 may be constrained or locked by the brake 240. When the user presses the brake 240, rotation of the main wheel 210 may be prevented. In some implementations, the brake 240 may be configured to be pressed with a foot.

The main wheel 210 includes the first main wheel 211, the second main wheel 212, and the main wheel support portion 213.

The first main wheel 211 and the second main wheel 212 are disposed to face each other by being spaced apart in a width direction of the base portion 120, namely, in the left-and-right direction in the illustrated example.

Rotation of any one of the first main wheel 211 and the second main wheel 212 may be inhibited by the brake 240. Accordingly, the cart unit 20 may be stopped when the user manipulates the brake 240.

In detail, grooves (not shown) may be respectively provided on surfaces of the first main wheel 211 and the second main wheel 212 that face each other. That is, in the illustrated example, the grooves (not shown) may be respectively provided on a left surface of the first main wheel 211 and a right surface of the second main wheel 212 in a recessed manner.

The first main wheel 211 and the second main wheel 212 are rotatably coupled to the main wheel support portion 213.

The main wheel support portion 213 rotatably supports the first main wheel 211 and the second main wheel 212. In addition, the main wheel support portion 213 is coupled to one side of the base portion 120 facing the ground, namely, the lower rear side in the illustrated example.

The main wheel support portion 213 may be fixedly coupled to the base portion 120. Accordingly, even when the cart unit 20 travels in the left-and-right direction, a traveling direction of the main wheel 210 is not arbitrarily changed.

Accordingly, the main wheel support portion 213 may be referred to as one constituting element of the base portion 120.

The main wheel support portion 213 extends in a direction toward the main wheels 211 and 212, namely, in the left-and-right direction in the illustrated example. The first main wheel 211 is rotatably coupled to a right end of the main wheel support portion 213. The second main wheel 212 is rotatably coupled to a left end of the main wheel support portion 213.

A predetermined space is formed inside the main wheel support portion 213. Some constituting elements of the brake 240 may be mounted to the space. In addition, a battery (not shown) for supplying power to each constituting element of the cart unit 20 may be provided inside the main wheel support portion 213.

The sub wheel 220 is rotatably coupled to a lower front side of the base portion 120. The sub wheel 220 supports the front side of the cart unit 20.

The sub wheel 220 may be provided in plurality. In the depicted example, the sub wheel 220 includes a first sub wheel 221 located at the right side and a second sub wheel 222 located at the left side.

The first sub wheel 221 and the second sub wheel 222 are disposed to be spaced apart from each other in the width direction of the base portion 120, namely, the left-and-right direction in the illustrated example. A distance between the sub wheels 221 and 222 may be less than a distance between the main wheels 211 and 212.

The first sub wheel 221 and the second sub wheel 222 are rotatably coupled to the sub wheel support portion 223.

The sub wheel support portion 223 rotatably supports the sub wheels 220. In addition, the sub wheel support portion 223 is rotatably coupled to the base portion 120.

Accordingly, the sub wheel 220 may be rotated while being coupled to the sub wheel support portion 223. Also, as the sub wheel support portion 223 to which the sub wheel 220 is coupled is rotated relative to the base portion 120, a traveling direction of the sub wheel 220 may be changed.

That is, in the depicted example, the sub wheel 220 may be rotated with respect to a left-and-right direction of the sub wheel support portion 223. In addition, the sub wheel support portion 223 is coupled to the base portion 120 to be rotatable with respect to the up-and-down direction.

The sub wheel support portion 223 is coupled to one side of the base portion 120 opposite to the main wheel 210, namely, the lower front side in the illustrated example. Accordingly, the sub wheel support portion 223 may be rotated relative to the base portion 120.

Thus, according to force applied by the user or a state in which the main wheel 210 is rotated, the sub wheel support portion 223 may be rotated to face a specific direction. This may allow the user to easily adjust a traveling direction of the cart unit 20.

The sub wheel support portion 223 may be made of a lightweight and high rigidity material. In some implementations, the sub wheel support portion 223 may be made of reinforced plastics.

In some implementations, the sub wheel support portion 223 may support the sub wheels 221 and 222 in the form of a bearing (not shown). Accordingly, the sub wheel support portion 223 is not rotated irrespective of rotation of the sub wheels 221 and 222.

As will be discussed later, a part of the touch sensor 300 may be located at the sub wheel support portion 223. A detailed description thereof will be given later.

The motor 230 is coupled to the main wheel 210 to allow the main wheel 210 to rotate. The motor 230 may rotate the main wheel 210 clockwise or counterclockwise. Accordingly, the main wheel 210 may be rotated in a direction that the cart unit 20 moves forward or backward.

The motor 230 may be provided in plurality. The plurality of motors 230 may be coupled to the main wheels 211 and 212, respectively. In the depicted example, the motor 230 includes a first motor 231 coupled to the first main wheel 211 and a second motor 232 coupled to the second main wheel 212.

The motor 230 is electrically connected to the controller 400. More specifically, the motor 230 is electrically connected to a motor control module 460 of the controller 400. The motor 230 may be rotated according to operation information calculated by the controller 400.

The motor 230 may be rotated only when the user applies force while holding the handle 130. Accordingly, a safety incident or accident due to arbitrary rotation of the motor 230 and the main wheel 210 connected to the motor 230 may be prevented.

This may be achieved by the touch sensor 300. A detailed description thereof will be given later.

The motor 230 may be configured as any form that can be rotated and stopped according to power and a control signal. In some implementations, the motor 230 may be configured as a motor member.

The brake 240 allows or inhibits rotation of the main wheel 210. The user may press the brake 240 to allow or inhibit rotation of the main wheel 210.

In addition, the brake 240 may be electronically operated by the controller 400. As will be discussed later, the brake 240 may be operated according to calculated operation information that is sensed or detected by the touch sensor 300. The brake 240 is electrically connected to the controller 400.

The brake 240 may be configured as any form that can allow or inhibit rotation of the main wheel 210. In some implementations, the brake 240 may be configured as a disk brake or a drum brake.

In some implantations, the brake 240 may be configured as a pin inserted into or extracted from the main wheel 210. For example, a plurality of grooves may be formed in the main wheel 210 to provide a space in which the brake 240 is inserted.

The brake 240 is located adjacent to the main wheel 210. In the depicted example, the brake 240 is provided on the main wheel support portion 213 at the rear side to be located adjacent to the first main wheel 211 at the right side. In this example, the brake 240 may allow or inhibit rotation of the first main wheel 211.

Alternatively, the brake 240 may be located adjacent to the second main wheel 212 at the left side. In this example, the brake 240 may allow or inhibit rotation of the second main wheel 212.

### 3. Description of Example Touch Sensor 300

As illustrated in FIGS. 4 to 7, the smart controller 1 further includes the touch sensor 300.

The touch sensor 300 senses a distance between the handle 130 and an object. In addition, the touch sensor 300 detects whether an object is in contact with the handle 130. In some implementations, the object may be a user or hands of the user.

The touch sensor 300 is accommodated in the handle 130. In detail, the touch sensor 300 is accommodated in a space of the extended portion 132 that extends in one direction (the left-and-right direction in the drawings).

A fixing member may be provided to prevent the touch sensor 300 from being moved in the inner space of the extended portion 132.

As the touch sensor 300 is not exposed to the outside, it is not affected by an external environment. For example, even when it rains or snows, the touch sensor 300 may accurately sense information, and damage to the touch sensor 300 due to moisture or the like may be prevented.

The touch sensor 300 extends in one direction. The touch sensor 300 may extend in the same direction as the extended portion 132. In the illustrated example, the touch sensor 300 extends in the left-and-right direction.

The touch sensor 300 may have a board shape with a predetermined thickness. In the depicted example, the touch sensor 300 has a rectangular board shape with a longer side in the front-and-rear direction and a shorter side in the left-and-right direction.

The touch sensor 300 may detect whether an object is located above or on (in contact with) one side of the handle 130. In the depicted example, the touch sensor 300 may detect whether an object is located at or in contact with an upper side of the handle 130.

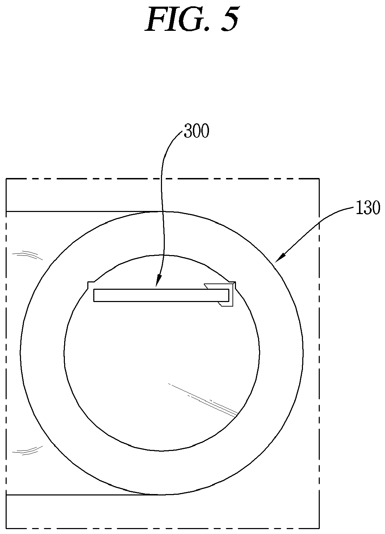

To this end, the touch sensor 300 may be disposed in a direction opposite to the base portion 120 in the inner space of the extended portion 132. That is, the touch sensor 300 may be located closer to the upper side (see FIG. 5).

The touch sensor 300 may detect information in real time and in a continuous manner. The information sensed by the touch sensor 300 may be mapped to a detected or sensed time point and transmitted to the controller 400.

The touch sensor 300 may detect whether an object exists at an outside of the handle 130 and whether an object is in contact with the handle 130. That is, the touch sensor 300 may transmit a signal passing through the handle 130, or receive a signal passing through the handle 130.

In some implementations, the touch sensor 300 may be configured as a high sensitivity sensor with high light transmission.

Accordingly, even when the user approaches the handle 130 and grips the handle 130 with gloves on, not with bare hands, this may be accurately sensed by the touch sensor 300.

Power required for the touch sensor 300 to be operated may be supplied by a battery (not shown). The touch sensor 300 is electrically connected to the battery (not shown). This electrical connection may be achieved by a conductor member (not shown) or the like.

Information sensed by the touch sensor 300 is transmitted to the controller 400. The touch sensor 300 is electrically connected to the controller 400.

The touch sensor 300 includes a sensor body portion 310 and a sensing region (or sensor region) 320.

The sensor body portion 310 defines a body of the touch sensor 300. The sensor body portion 310 extends in one direction, namely, in the left-and-right direction in the illustrated example. An extension length of the sensor body portion 310 may be less than an extension length of the extended potion 132.

The sensor body portion 310 is accommodated in the inner space of the extended portion 132. The sensor body portion 310 may be located closer to the upper side of the extended portion 132. To this end, a fixing member may be provided, as described above.

The sensor body portion 310 may have a board shape with a predetermined thickness. In the depicted example, the sensor body portion 310 has a rectangular board shape with a longer side in the front-and-rear direction and a shorter side in the left-and-right direction.

The sensing region 320 is located at one side of the sensor body portion 310 opposite to the base portion 120, namely, at the upper side in the illustrated example.

The sensing region 320 is formed by dividing or partitioning one side, namely, an upper surface of the sensor body portion 310 in the illustrated example. That is, the partitioned upper surfaces of the sensor body portion 310 define the sensing region 320.

The sensing region 320 may be provided in plurality. Each of the plurality of sensing region 320 may have a predetermined area. In addition, the plurality of sensing regions 320 may be arranged sequentially in a direction in which the sensor body portion 310 extends, namely, in the left-and-right direction in the illustrated example.

Each of the plurality of sensing regions 320 may detect whether an object is located above the handle 130 and whether the object is in contact with the handle. In some implementations, the sensing region 320 may detect the presence and absence of an object in an upper vertical direction and detect whether the object is in contact with the handle 130.

Accordingly, a relative position between the handle 130 and an object, and changes in the relative position therebetween may be calculated using information sensed by the plurality of sensing regions 320. A detailed description of this will be given later.

In the illustrated example, the sensing region 320 includes six sensing regions 320 that are sequentially disposed from one end to another end of the sensor body portion 310.

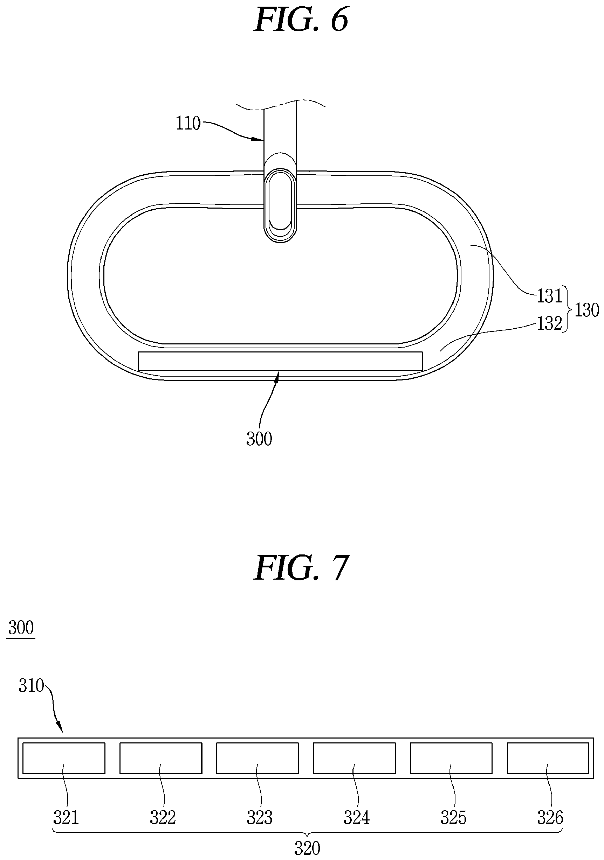

That is, in the example illustrated in FIG. 7, first to sixth regions 321, 322, 323, 324, 325 and 326 are sequentially arranged from a left end to a right end of the sensor body portion 310.

In the depicted example, the first to sixth regions 321, 322, 323, 324, 325, and 326 have a rectangular shape. In addition, the first to sixth regions 321, 322, 323, 324, 325, and 326 are disposed to be spaced apart from each other. Alternatively, the first to sixth regions 321, 322, 323, 324, 325, and 326 may be arranged in a continuous manner.

Both of them are suitable when an object located above the regions 321, 322, 323, 324, 325, 326 and a region in contact with the handle 130 can be detected.

Detailed processes of calculating various information according to information sensed by the regions 321, 322, 323, 324, 325, and 326, and controlling the cart unit 20 will be described hereinafter.

### 4. Description of Example Controller 400

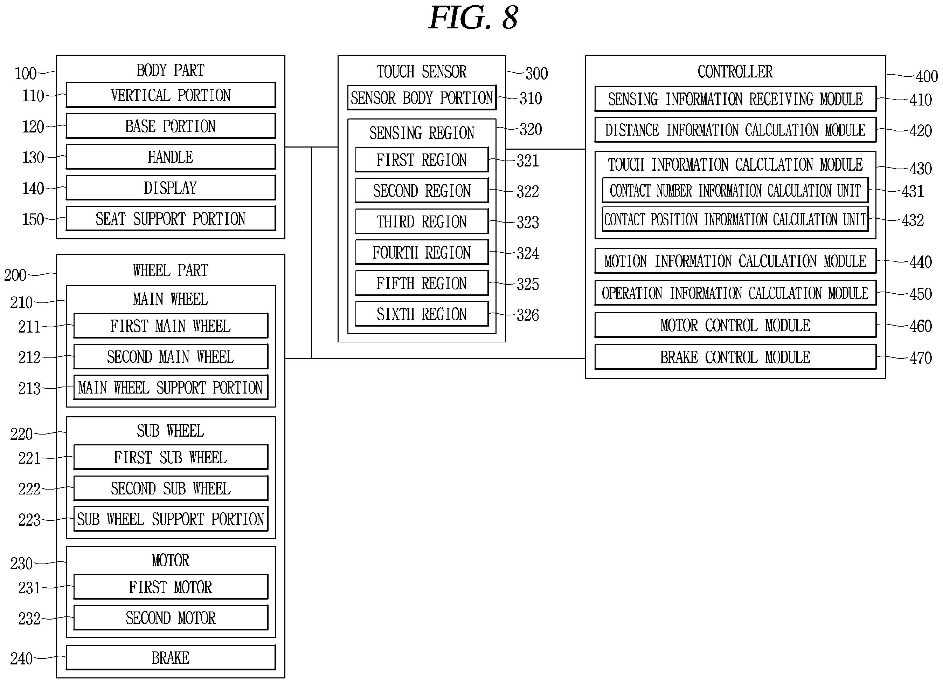

As illustrated in FIG 8, the smart stroller 1 includes the controller 400.

The controller 400 receives information sensed by the touch sensor 300. The controller 400 is electrically connected to the touch sensor 300. This electrical connection may be achieved in a wireless or wired manner. In some implementations, the controller 400 and the touch sensor 300 may be electrically connected to each other by a conducting member (not shown).

The controller 400 calculates distance information, touch information, motion information, and operation information using the received information. The operation information calculated by the controller 400 is used to control the motor 230 or the brake 240.

The controller 400 may be configured as any form that can input, calculate, and output information. In some implementations, the controller 400 may be configured as a microprocessor, CPU, and the like.

Modules 410, 420, 430, 440, 450, 460, and 470 of the controller 400, which will be described hereinafter, are electrically connected to each other. Each of the modules 410, 420, 430, 440, 450, 460, and 470 may transmit information to one another.

In the depicted example, the controller 400 includes a sensing information receiving module 410, a distance information calculation module 420, a touch information calculation module 430, a motion information calculation module 440, and an operation information calculation module 450, a motor control module 460, and a brake control module 470.

In some implementations, the controller 400 may include a display control module. The display control module may control the display 140 according to calculated operation information. Accordingly, the user may recognize various information related to operation of the smart stroller 1 through visual information output to the display 140.

The sensing information receiving module 410 receives information sensed by the touch sensor 300, that is, information regarding a region above which an object is located, among the plurality of regions 321, 322, 323, 324, 325, 326 of the sensing region 320.

In addition, the sensing information receiving module 410 receives information regarding a region where an object is in contact with the handle 130, among the plurality of regions 321, 322, 323, 324, 325, 326 of the sensing region 320.

Here, information received by the sensing information receiving module 410 may be mapped to a detection time point.

The sensing information receiving module 410 is electrically connected to the touch sensor 300.

The information received by the sensing information receiving module 410 is transmitted to the distance information calculation module 420 and the touch information calculation module 430. The sensing information receiving module 410 is electrically connected to the distance information calculation module 420 and the touch information calculation module 430.

The distance information calculation module 420 uses information sensed by the touch sensor 300 to calculate distance information regarding a distance between the handle 130 and the outside, namely, an object located above.

In some implementations, the distance information calculation module 420 may calculate distance information regarding a distance with an object located above the handle 130. Here, the distance information calculation module 420 may calculate the distance information as a distance between the handle 130 and the object through a series of correction processes. Here, distance information calculated by the distance information calculation module 420 may be mapped to a detection time point.

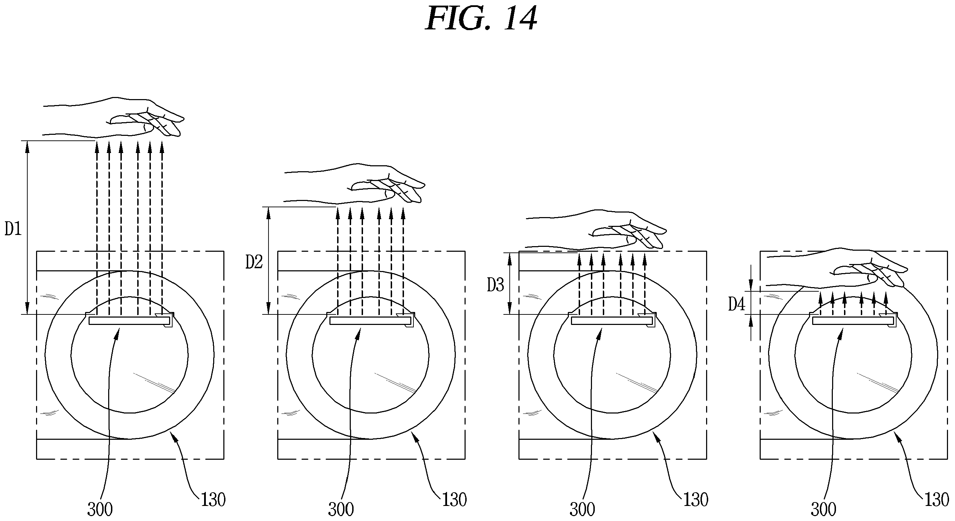

The distance information calculation module 420 may classify the distance information into a plurality of distance categories. In some implementations, the distance information calculation module 420 may classify calculated distance information into four distance categories: a very far distance D1, a far distance D2, a close distance D3, and a contact distance D4 (see FIG. 14).

Here, the very far distance D1 may be defined as a distance that can be determined that no object is located above the handle 130. The far distance D2 may be defined as a distance in which an object is located above the handle 130 and is not in contact with the handle 130.

The close distance D3 may be defined as a distance in which an object is located above the handle 130 from a distance closer than the far distance D2 and is not in contact with the handle 130. The contact distance D4 may be defined as a distance in which an object is contact with the handle 130.

Therefore, it will be understood that inequality relations among the distances is as follows: the very far distance D1 > the far distance D2 > the close distance D3 > the contact distance D4.

The classification is beneficial when the touch information calculation module 430 calculates touch information and the motion information calculation module 440 calculates motion information.

Distance information calculated by the distance information calculation module 420 and a result of the distance classification are transmitted to the touch information calculation module 430, the motion information calculation module 440, and the operation information calculation module 450. The distance information calculation module 420 is electrically connected to the touch information calculation module 430, the motion information calculation module 440, and the operation information calculation module 450.

Here each transmitted distance information includes information regarding a detection time point.

Using information detected by the touch sensor 300, the touch information calculation module 430 calculates touch information regarding whether or not an object is in contact with one side of the handle 130, namely, the upper side in the illustrated example.

The touch information calculation module 430 may calculate touch information based on information sensed by the touch sensor 300.

That is, when the touch sensor 300 detects an object in contact with the handle 130, the touch information calculation module 430 may calculate touch information according to it. Likewise, when the touch sensor 300 detects no object in contact with the handle 130, the touch information calculation module 430 may calculate touch information according to it.

In addition, the touch information calculation module 430 may calculate touch information by using distance information calculated by the distance information calculation module 420.

For example, when the calculated distance information is classified as the very far distance D1, the far distance D2, and the close distance D3, the touch information calculation module 430 may calculate touch information as no object in contact with handle 130.

When the calculated distance information is classified as the contact distance D4, the touch information calculation module 430 may calculate touch information as an object in contact with the handle 130.

The touch information calculation module 430 includes a contact number information calculation unit 431 and a contact position information calculation unit 432.

When an object is in contact with handle 130, the contact number information calculation unit 431 calculates contact number information, which is information regarding the number of points or portions with which the handle 130 and the object are in contact.

That is, the contact number information calculation unit 431 calculates contact number information regarding the number of regions that detects the object, among the plurality of regions 321, 322, 323, 324, 325, and 326.

When the object is in contact with the handle 130, the contact position information calculation unit 432 calculates contact position information, which is information regarding a position where the object is in contact with the handle 130.

In other words, the contact position information calculation unit 432 calculates contact position information regarding a region in contact with the object, among the plurality of regions 321, 322, 323, 324, 325, and 326.

That is, touch information calculated by the touch information calculation module 430 includes information regarding whether or not an object is in contact with the handle 130, and information regarding how many regions are involved (i.e., information regarding the number of contact regions) and information regarding which region is involved (i.e., contact position information) when the object is in contact with the handle 130.

Here, in the touch information calculated by the touch information calculation module 430, a time point for each information sensed by the touch sensor 300, which is used to calculate the touch information, may be mapped.

The touch information calculated by the touch information calculation module 430 is transmitted to the operation information calculation module 450. The touch information calculation module 430 and the operation information calculation module 450 are electrically connected to each other.

Using calculated distance information, the motion information calculation module 440 calculates motion information, which is information regarding changes in a distance between the handle 130 and an object. The motion information calculation module 440 is electrically connected to the distance information calculation module 420.

Further, the motion information calculation module 440 calculates motion information, which is information on movement of an object that is located on or above the handle 130 by using the calculated touch information. The motion information operation module 440 is electrically connected to the touch information operation module 430.

That is, motion information includes information regarding changes in a distance between the handle 130 and an object in a longitudinal direction (i.e., a vertical direction) as time has elapsed, and information regarding changes in a relative position between the handle 130 and the object in a transverse direction (i.e., a horizontal direction).

As described above, the handle 130 and the touch sensor 300 may extend in the left-and-right direction. Accordingly, motion information may be information regarding movement of an object in the up-and-down direction and the left-and-right direction.

More specifically, information regarding movement of an object in the up-and-down direction, among the motion information, may be calculated using distance information calculated by the distance information calculation module 420.

Here, the motion information may be calculated as the object moving in a direction toward the handle 130 (i.e., moving downward), or the object moving in a direction away from the handle 130 (i.e., moving upward).

Or, the motion information may be calculated as no change in a distance between the object and the handle 130.

Among the motion information, information regarding movement of an object in the left-and-right direction may be calculated using touch information calculated by the touch information calculation module 430.

Here, the motion information may be calculated as the object moving in a direction toward one of the plurality of regions 321, 322, 323, 324, 325, and 326. In addition, the motion information may include information regarding changes in the number of object contact regions of the plurality of regions 321, 322, 323, 324, 325, and 326.

As described above, each of the regions 321, 322, 323, 324, 325, and 326 of the touch sensor 300 may sense information regarding a distance between the handle 130 and an object, or information regarding whether or not the object is in contact with the handle 130.

Therefore, information regarding movement of an object in the left-and-right direction, among the motion information, may be calculated using distance information.

The motion information calculated by the motion information calculation module 440 is transmitted to the operation information calculation module 450 so as to calculate operation information for controlling the cart unit 20. The motion information calculation module 440 is electrically connected to the operation information calculation module 450.

The operation information calculation module 450 calculates operation information for controlling the cart unit 20 using calculated distance information, touch information, or motion information. The operation information calculation module 450 is electrically connected to the distance information calculation module 420, the touch information calculation module 430, and the motion information calculation module 440.

A process in which the operation information calculation module 450 calculates operation information using distance information will be described.

The operation information calculation module 450 compares calculated distance information with predetermined or preset reference distance information. Here, the preset reference distance information may be defined as a maximum distance that allows the user to immediately grip the handle 130 when the cart unit 20 starts moving or traveling.

As described above, the calculated distance information may be classified into the very far distance D1, the far distance D2, the close distance D3, and the contact distance D4. From the very far distance D1 and the far distance D2, it may be difficult for the user to reach and grip the handle 130.

Therefore, in some implementations, the reference distance information may be defined as the close distance D3. That is, when the calculated distance information is greater than the close distance D3, that is, the calculated distance information corresponds to the very far distance D1 or the far distance D2, the operation information calculation module 450 calculates operation information that inhibits rotation of the main wheel 210 by the brake 240.

Here, when the calculated distance information is the close distance D3, the user can reach and grip the handle 130 immediately. However, for safety of the baby on board, the cart unit 20 should remain stationary.

Accordingly, even if the calculated distance information is less than or equal to the reference distance information, the cart unit 20 according to this example calculates operation information that controls the brake 240 to keep the main wheel 210 stationary.

Next, a process in which the operation information calculation module 450 calculates operation information using calculated touch information will be described.

When calculated touch information is that an object is being spaced apart from the handle 130, it may be determined that the handle 130 is not gripped by the user. Accordingly, the operation information calculation module 450 calculates operation information to control the brake 240 to inhibit rotation of the main wheel 210.

When calculated touch information is that an object is being in contact with the handle 130, the operation information calculation module 450 calculates operation information using contact number information.

In detail, the operation information calculation module 450 compares calculated contact number information and preset reference contact number information. Here, the preset reference contact number information may be a maximum number that can be determined that the user is gripping the handle 130 by hand.

In some implementations, the reference contact number information may be set to "two (2)", that is, when the user is holding the handle 130 with both hands.

When the calculated contact number information is greater the reference contact number information, it may be determined that the user is leaning on the handle 130 and the like, other than gripping the handle 130 with one or both hands.

Accordingly, the operation information calculation module 450 calculates operation information that controls the brake 240 to inhibit rotation of the main wheel 210.

In contrast, when the calculated contact number information is less than or equal to the reference contact number information, it may be determined that the user is gripping the handle 130 with one or both hands.

Accordingly, the operation information calculation module 450 calculates operation information that controls the brake 240 to allow rotation of the main wheel 210. That is, the operation information is calculated to unlock or release the brake 240.

In addition, when the handle 130 is gripped by the user, it may be determined that the user is intended to push or press the handle 130 to make the cart unit 20 travel.

Accordingly, the operation information calculation module 450 calculates operation information that controls the motor 230 to allow the main wheel 210 to rotate in a direction in which the user presses the handle 130.

Next, a process in which the operation information calculation module 450 calculates operation information using calculated motion information will be described.

The operation information calculation module 450 calculates operation information by comparing calculated motion information with preset reference motion information. The preset reference motion information may be defined as information regarding a motion taken by the user to start or stop operation of the cart unit 20.

Hereinafter, information regarding a motion taken by the user to start operation of the cart unit 20 will be referred to as 'first reference motion information', and information regarding a motion taken by the user to stop operation of the cart unit 20 will be referred to as 'second reference motion information'.

In some implementations, the first reference motion information may be motion information regarding an object moving in a direction toward the handle 130 (i.e., moving downward) and moving toward a central portion of the touch sensor 300, namely, toward the third region 323 or the fourth region 324 in the illustrated example.

That is, when the motion information is calculated as the object moving in the direction toward the handle 130 (i.e., moving downward), it may be determined that the user is reaching his or her hand out to the handle 130. Since the user is reaching his or her hand out to the handle 130 from a distance, it may be expected that the cart unit 20 is at a stop.

Here, since the handle 130 is not completely gripped by the hand of the user, it is not preferable to start operation of the cart unit 20 for safety of the baby on board. However, as it can be expected that the cart unit 20 is soon to be operated, it is also not preferable to remain the cart unit 20 stationary.

Accordingly, in order to start operation of the cart unit 20, an additional motion that can be determined that the handle 130 is firmly gripped by the user is required.

Therefore, the first reference motion information includes all of motion information regarding an object moving downward to the handle 130 to be brought into contact therewith and moving toward the vertical portion 130, namely, toward the third region 323 or the fourth region 324.

When the calculated motion information corresponds to the first reference motion information, the operation information calculation module 450 calculates operation information that enables the cart unit 20 to travel, namely, operation information that controls the brake 240 to be released to allow the main wheel 210 to be rotate.

In some implementations, the second reference motion information may be motion information regarding an object moving upward to be away from the handle 130 after moving toward a central portion of the touch sensor 300 in a state that the object is in contact with the handle 130, namely, moving from the third region 323 or the fourth region to the first region 321 or the sixth region 326 in the illustrated example.

That is, when motion information is calculated as the object moving in a direction away from the vertical portion 110, it may be determined that the user wants to stop the cart unit 20. However, since the hand of the user is not completely separated from the handle 130, the user may simply change a position of the hand to change the posture.

Therefore, in order to stop operation of the cart unit 20, a motion that can be determined that the user is taking his or her hand off the handle 130 is further required.

Accordingly, the second reference motion information includes all motion information regarding an object moving in a direction away from the vertical portion 110 while being in contact with the handle 130 and moving upward to be away from the handle 130.

When the calculated motion information corresponds to the second reference motion information, the operation information calculation module 450 calculates operation information that causes the cart unit 20 to stop 20, namely, operation information that controls the brake 240 to be operated to prevent the main wheel 210 from being rotated.

The operation information calculated by the operation information calculation module 450 is transmitted to the motor control module 460 and the brake control module 470. The operation information calculation module 450 is electrically connected to the motor control module 460 and the brake control module 470.

In some implementations, the operation information calculation module 450 may calculate operation information for controlling the display 140. For example, the operation information calculation module 450 may calculate operation information that controls the display 140 to emit light or blink, or operation information that controls the display 140 to extinguish light.

In this case, the calculated operation information is transmitted to the display 140. Here, the operation information calculation module 450 and the display 140 are electrically connected to each other.

The motor control module 460 controls rotation of the motor 230 according to calculated operation information. The motor control module 460 is electrically connected to the operation information calculation module 450.

Operation information transmitted to the motor control module 460 may include information for stopping the motor 230, or rotating the motor 230 clockwise or counterclockwise.

As described above, the motor 230 may include the first motor 231 located at the right side and the second motor 232 located at the left side. Accordingly, the operation information transmitted to the motor control module 460 may include information for controlling rotation of the first motor 231 and the second motor 232.

The motor control module 460 controls rotation of the motor 230 according to received operation information. To this end, the motor control module 460 is electrically connected to the motor 230.

The brake control module 470 controls operation of the brake 240, that is, whether or not the brake 240 is operated according to calculated operation information. The brake control module 470 is electrically connected to the operation information calculation module 450.

Operation information transmitted to the brake control module 470 may be either one of operating the brake 240 to inhibit rotation of the main wheel 210 or releasing the brake 240 to allow rotation of the main wheel 210.

The brake control module 470 controls operation of the brake 240 according to received operation information. To this end, the brake control module 470 is electrically connected to the brake 240.

### 5. Description of Example Method of Controlling Cart Unit 20

The cart unit 20 according to the implementations of the present disclosure may be controlled through the above-described configuration. Accordingly, the user may easily control operation of the cart unit 20 by gripping the handle 130 or changing a distance with the handle 130. Further, the user may easily control the operation of the cart unit 20 by taking a predetermined motion.

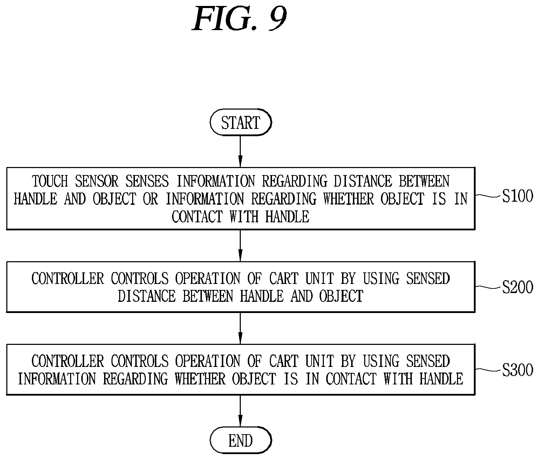

Hereinafter, an example method of controlling the cart unit 20 will be described in detail with reference to FIGS. 9 to 12.

In the depicted example, the method of controlling the cart unit 20 includes sensing information regarding a distance between an object and the handle 130 or information regarding whether the object is in contact with the handle 130 by the touch sensor 300 (S100), controlling operation of the cart unit 20, by the controller 400, by using the sensed distance information between the object and the handle 130 (S200), and controlling operation of the cart unit 20, by the controller 400, by using information regarding whether the object is in contact with the handle 130 (S300).

Here, as described above, the object may be a hand or hands of the user.

### (1) Description of Step S100: Sensing, by the touch sensor 300, information regarding a distance between the handle 130 and an object or information regarding whether or not the object is in contact with handle 130

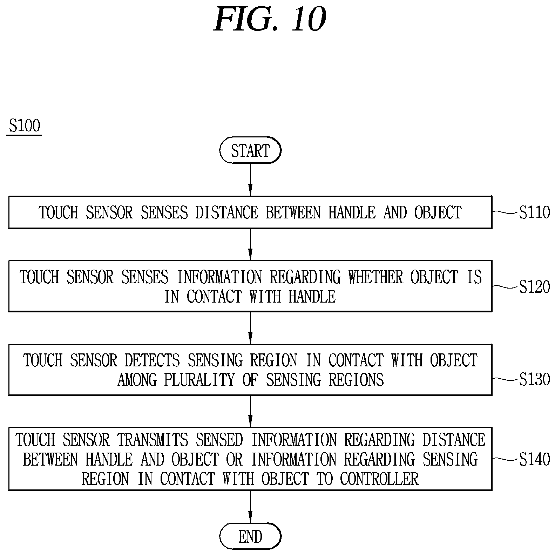

The step S100 is a step in which the touch sensor 300 senses information regarding a distance between an object located above one side of the handle 130, namely, the upper side, or whether the object is in contact with (or located on) the handle 130. Hereinafter, the step S100 will be described in detail with reference to FIG. 10.

First, the touch sensor 300 senses a distance between the handle 130 and an object (S110). This is because in order for the user to grip the handle 130, the user should reach his or her hand out to the handle 130.

Here, each of the regions 321, 322, 323, 324, 325, and 326 of the touch sensor 300 may detect whether the object is located above the handle 130. That is, the touch sensor 300 may sense information regarding a region above which the object is located, among the regions 321, 322, 323, 324, 325, and 326.

Next, the touch sensor 300 senses information regarding whether the object is in contact with the handle 130 (S120). In addition, the touch sensor 300 detects a sensing region 320 in contact with the object among the plurality of sensing regions 320 (S130).

That is, the touch sensor 300 may sense information regarding a region where the object is in contact with the handle 130, among the regions 321, 322, 323, 324, 325, and 326.

In addition, information sensed by the touch sensor 300, that is, information regarding the distance between the handle 130 and the object, and information regarding whether the object is in contact with the handle 130 may be mapped to a detection time point.

The touch sensor 300 transmits sensed information, that is, information regarding the distance information between the handle 130 and the object, or information regarding the sensing region 320 in contact with the object to the controller 400 (S140).

Here, it will be understood that the information regarding the sensing region 320 in contact with the object is information regarding a region where the object is in contact with the handle 130, among the regions 321, 322, 323, 324, 325, and 326.

### (2) Description of Step S200: Controlling operation of the cart unit 20 by the controller 400 using the sensed distance between the handle 130 and the object

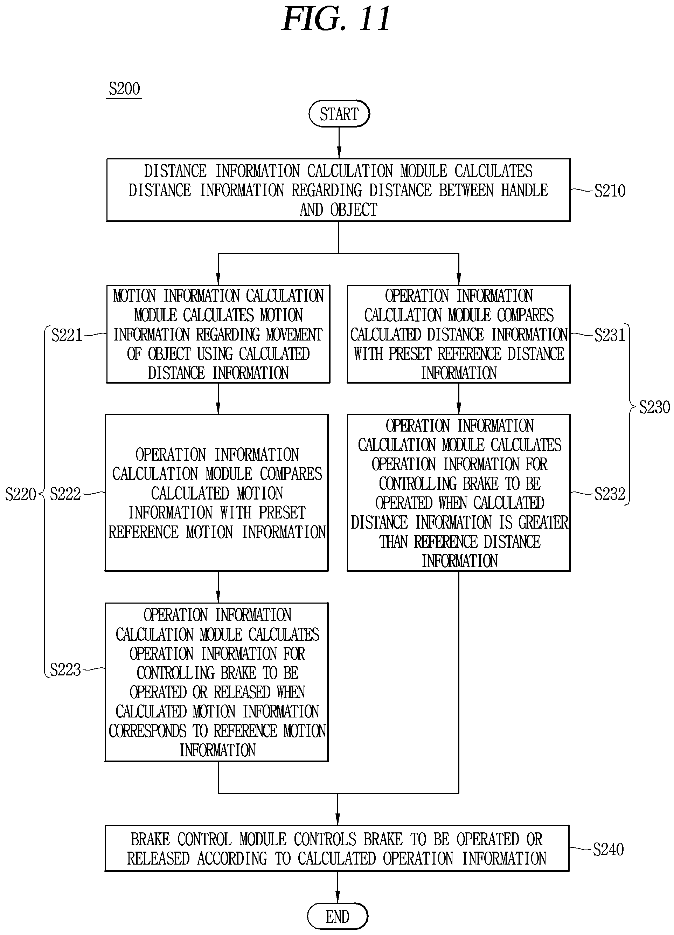

The step S200 may be a step of controlling operation of the cart unit 20. In order for this, the distance information calculation module 420 of the controller 400 calculates distance information regarding a distance between the handle 130 and an object, and the operation information calculation module 450 calculates operation information according to the calculated distance information. Hereinafter, the step of S200 will be described in detail with reference to FIG 11.

First, the distance information calculation module 420 calculates distance information regarding the distance between the handle 130 and the object by using information sensed by the touch sensor 300 (S210).

As described above, the distance information calculation module 420 may calculate a distance between the object and the handle 130, or a distance between the object and the touch sensor 300 using the sensed information.

In addition, the distance information calculation module 420 may classify the calculated distance information into four distance categories: a very far distance D1, a far distance D2, a close distance D3, and a contact distance D4.

Distance information calculated by the distance information calculation module 420 is transmitted to the motion information calculation module 440 and the operation information calculation module 450. The distance information calculation module 420 is electrically connected to the motion information calculation module 440 and the operation information calculation module 450.

First, a step S220 in which the motion information calculation module 440 calculates motion information based on distance information calculated by the distance information calculation module 420 to thereby calculate operation information will be described.

The motion information calculation module 440 receives the distance information calculated by the distance information calculation module 420. The motion information calculation module 440 calculates motion information regarding movement of the object using the received distance information (S221).

As described above, the motion information may include information regarding changes in the distance between the object and the handle 130 in the up-and-down direction and information regarding movement of the object in the left-and-right direction after being brought into contact with the handle 130.

The operation information calculation module 450 receives the calculated motion information from the motion information operation module 440. The operation information calculation module 450 compares the calculated motion information with preset reference motion information (S222).

The reference motion information may be defined as motion information that should be input to operate the cart unit 20 in a preset or predetermined manner. In addition, as described above, the reference motion information may include first reference motion information for operating the cart unit 20 and second reference motion information for stopping the cart unit 20.

When the calculated motion information corresponds to the reference motion information, the operation information calculation module 450 calculates operation information that controls the brake 240 to be operated or released (S223).

In detail, when the calculated motion information corresponds to the first reference motion information, the operation information calculation module 450 calculates operation information for controlling the brake 240 to be released so as to allow the main wheel 210 to rotate.

In addition, when the calculated motion information corresponds to the second reference motion information, the operation information calculation module 450 calculates operation information for controlling the brake 240 to be operated so as to inhibit rotation of the main wheel 210.

The operation information calculated by the operation information calculation module 450 is transmitted to the brake control module 470. The brake control module 470 controls the brake 240 to be operated or released according to the calculated operation information (S240).

Next, a step S230 in which the operation information calculation module 450 calculates operation information by using calculated distance information will be described.

The operation information calculation module 450 receives the distance information calculated by the distance information calculation module 420. The operation information calculation module 450 compares the received distance information with preset reference distance information (S231).

When the calculated distance information is greater than the reference distance information, the operation information calculation module 450 calculates operation information that controls the brake 240 to be operated (S232).

In some implementations, the reference distance information may be defined as the close distance D3. When the calculated distance information is greater than the close distance D3, operation information that controls the brake 240 to inhibit rotation of the main wheel 210 may be calculated, as described above.

The operation information calculated by the operation information calculation module 450 is transmitted to the brake control module 470. The brake control module 470 controls the brake 240 to be operated according to the calculated operation information (S240).

Accordingly, in this step, a locked state (stop) and an unlocked state of the cart unit 20 may be controlled using motion information input by the user and distance information between a hand (or hands) of the user and the handle 130.

### (3) Description of Step S300: Controlling, by the controller 400, operation of the cart unit 20 using sensed information regarding whether the object is in contact with the handle 130

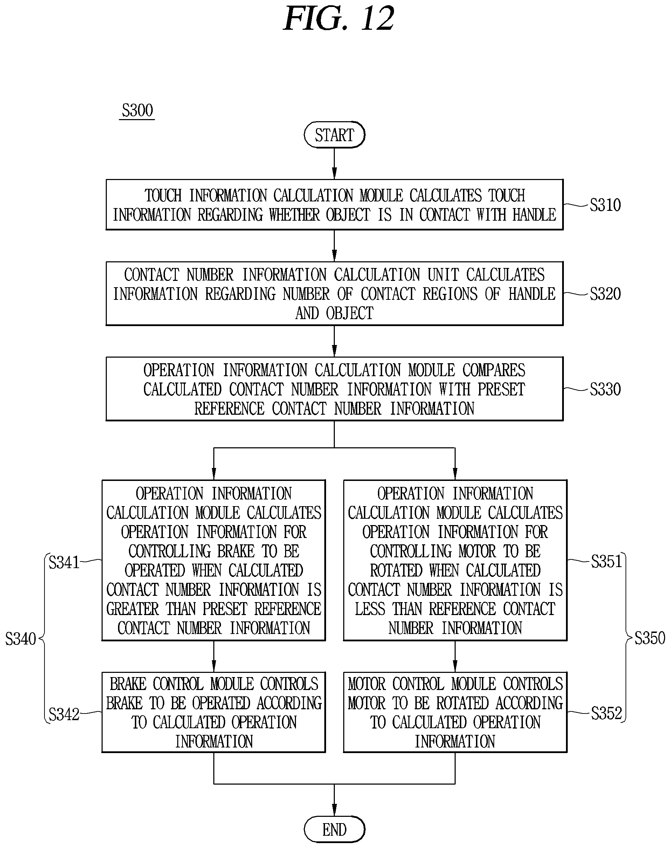

The step S300 is a step in which the touch information calculation module 430 of the controller 400 calculates touch information using sensed information, and the operation information calculation module 450 calculates operation information using the calculated touch information. Hereinafter, the step S300 will be described in detail with reference to FIG. 12.

First, the touch information calculation module 430 calculates touch information regarding whether or not the object is in contact with the handle 130 (S310). The process may be calculated using information sensed by the touch sensor 300.

In some implementations, the touch information may be calculated using calculated distance information, as described above.

The contact number information calculation unit 431 of the touch information calculation module 430 calculates contact number information regarding the number of regions or portions where the object is in contact with the handle 130 (S320).

That is, the contact number information is calculated when the handle 130 and the object are in contact with each other. Thus, unnecessary calculation processes may be prevented. The calculated contact number information is transmitted to the operation information calculation module 450. The touch information calculation module 430 and the operation information calculation module 450 are electrically connected to each other.

The operation information calculation module 450 compares the calculated contact number information with preset reference contact number information (S330). Operation information calculated by the operation information calculation module 450 may vary according to a result of the comparison.

First, when the calculated contact number information is greater than the reference contact number information, the brake 240 is controlled to be operated (S340).

When the calculated contact number information is greater than the preset reference contact number information, the operation information calculation module 450 calculates operation information that controls the brake 240 to be operated (S341).

As described above, the reference contact number information may be set to "two". That is, when the calculated contact number information is greater than two, it may be considered that the user is leaning on the handle 130 and the like, other than gripping the handle 130 with one or both hands.

Accordingly, the operation information calculation module 450 calculates operation information that controls the brake 240 to be operated to inhibit rotation of the main wheel 210.

The operation information calculated by the operation information calculation module 450 is transmitted to the brake control module 470. The brake control module 470 controls the brake 240 to be operated according to the calculated operation information (S342).

Next, when the calculated contact number information is less than or equal to the reference contact number information, a step S350 of controlling the motor 230 to be rotated will be described.

When the calculated contact number information is less than or equal to the reference contact number information, the operation information calculation module 450 calculates operation information that controls the motor 230 to be rotated (S351).

As described above, the reference contact number information may be set to two. That is, when the calculated number of contact regions is less than or equal to two, it may be considered that the user is gripping the handle 130 with one or two hands.

Accordingly, the operation information calculation module 450 calculates operation information that controls the motor 230 to be rotated. Although not illustrated in the drawing, it will be understood that a step in which the operation information calculation module 450 calculates operation information that controls the brake 240 to allow the motor 230 to rotate is performed before the step S351.

The operation information calculated by the operation information calculation module 450 is transmitted to the motor control module 460. The motor control module 460 controls the motor 230 to be operated according to the calculated operation information (S352).

It will be understood that a step of controlling the brake 240 to be released as the operation information calculated by the operation information calculation module 450 is transmitted to the brake control module 470 may be performed prior to the step S352.

Therefore, in the step S300, only when the handle 130 is gripped by one or both hands of the user, the main wheel 210 is unlocked or released, and the motor 230 is rotated to allow the cart unit 20 to travel.

### 6. Description of Example of Controlling Cart Unit 20 according to Sensed Information

In the cart unit 20 and the method of controlling the same according to the implementations of the preset disclosure, the cart unit 20 may be variously controlled according to a distance between a hand (or hands) of the user and the handle 130 and depending on whether the handle 130 is gripped by the hand of the user.

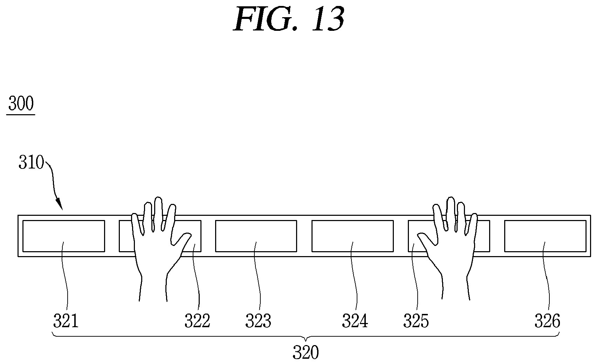

Hereinafter, examples of controlling the cart unit 20 according to its control method will be described in detail with reference to FIGS. 13 to 16.

Referring to FIG. 13, hands of the user are located on the touch sensor 300. For the sake of understanding, the handle 130 is omitted.

As described above, the upper surface of the touch sensor 400 is divided into the plurality of sensing regions 320. In the depicted example, a total of six sensing regions 320 are provided, including the first to sixth regions 321, 322, 323, 324, 325, and 326.

The first to sixth regions 321, 322, 323, 324, 325, and 326 may independently sense a distance with hands of the user, or whether the handle 130 is gripped by the hands of the user.

In the depicted example, the hands of the user are located at the upper side of the second region 322 and the fifth region 325, respectively.

Assuming that the hands of the user are in contact with the touch sensor 300, information regarding the contact number may be calculated as two, and contact position information may be calculated as the second region 322 and the fifth region 325.

FIG. 14 illustrates an example of sensing a distance between a hand of the user and the handle 130 or the touch sensor 300, and calculating the distance by the distance information calculation module 420.

In the depicted example, the distance between the hand of the user and the handle 130 or the touch sensor 300 decreases from left to right.

Referring to the first drawing from the left, a distance between the hand of the user and the touch sensor 300 is classified as the very far distance D1. In this state, the operation information calculation module 450 calculates control information that operates the brake 240 to inhibit rotation of the main wheel 210.

Referring to the second drawing from the left, a distance between the hand of the user and the touch sensor 300 is classified as the far distance D2. In this state, the operation information calculation module 450 calculates control information that operates the brake 240 to inhibit rotation of the main wheel 210.

Referring to the third drawing from the left, a distance between the hand of the user and the touch sensor 300 is classified as the close distance D3. In this state, the operation information calculation module 450 calculates control information that operates the brake 240 to inhibit rotation of the main wheel 210.

Referring to the fourth drawing from the left (or the first drawing from the right), a distance between the hand of the user and the touch sensor 300 is classified as the contact distance D4. That is, it may be determined that the handle 130 is gripped by the hand of the user.

In this state, the touch information calculation module 430 calculates touch information using the distance. Here, the calculated touch information may include contact number information and contact position information.

The operation information calculation module 450 calculates operation information for controlling the brake 240 or the motor 230 based on the calculated touch information. The calculated operation information is transmitted to the motor control module 460 or the brake control module 470.

In addition, since the distance between the hand of the user and the touch sensor 300 gradually decreases, it may be determined that the hand of the user is moving toward the handle 130.

Accordingly, the motion information calculation module 440 calculates motion information by using changes in the distance information. Here, in the example illustrated in FIG. 14, only a vertical distance between the hand of the user and the handle 130 is changed.

Thus, in order for the operation information calculation module 450 to calculate operation information using the calculated motion information, input of additional motion information is required. That is, it may be considered as a state in which the calculated motion information is different from preset reference motion information.

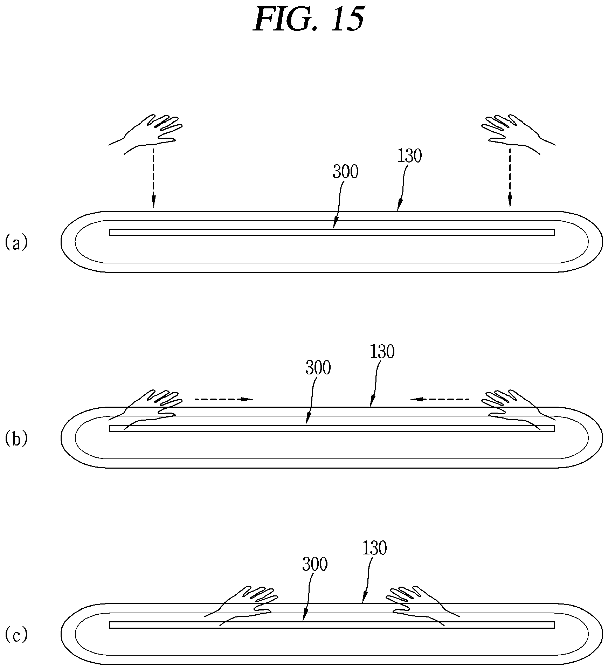

FIG. 15 illustrates an example in which the user inputs motion information for operating the cart unit 20.

Referring to (a) of FIG. 15, the user is moving his or her both hands downward to the handle 130.

Accordingly, calculated distance information and motion information calculated according to the calculated distance information are calculated that both hands of the user are moving toward the handle 130 or the touch sensor 300.

In (b) of FIG. 15, the user is moving his or her both hands toward a central portion or part of the handle 130, that is, toward the vertical portion 110. In some implementations, the user may move his or her both hands while being in contact with the handle 130.

Accordingly, motion information is calculated that the hands of the user is moving toward each other, that is, toward a central part of an extension direction of the touch sensor 300.

In (c) of FIG. 15, the hands of the user are located at the central part of the handle 130 or the central part of the extension direction of the touch sensor 300. At this time, the handle 130 may be gripped by the hands of the user.

Accordingly, motion information has been input by the user by moving his or her both hands. The motion information calculation module 440 transmits calculated motion information to the operation information operation module 450, and the operation information operation module 450 compares the motion information with reference motion information.

Here, it will be understood that each of the steps illustrated in FIG. 15 corresponds to the first reference motion information. Accordingly, the operation information calculation module 450 calculates operation information for controlling the brake 240 to be released.

As the brake 240 is released, the main wheel 210 is rotated to allow the cart unit 20 to travel.

In addition, the touch information calculation module 430 calculates touch information using information sensed by the touch sensor 300 or distance information calculated by the distance information calculation module 420. In this state, the touch information may be calculated that two points of the handle 130 are gripped by the hands of the user.

Accordingly, the operation information calculation module 450 calculates operation information for controlling the motor 230 to be rotated.

As a result, the motor 230 may be rotated such that the main wheel 210 is rotated in a direction in which force is applied by the user. Therefore, an amount of force required for the user to make the cart unit 20 travel or move may be reduced.

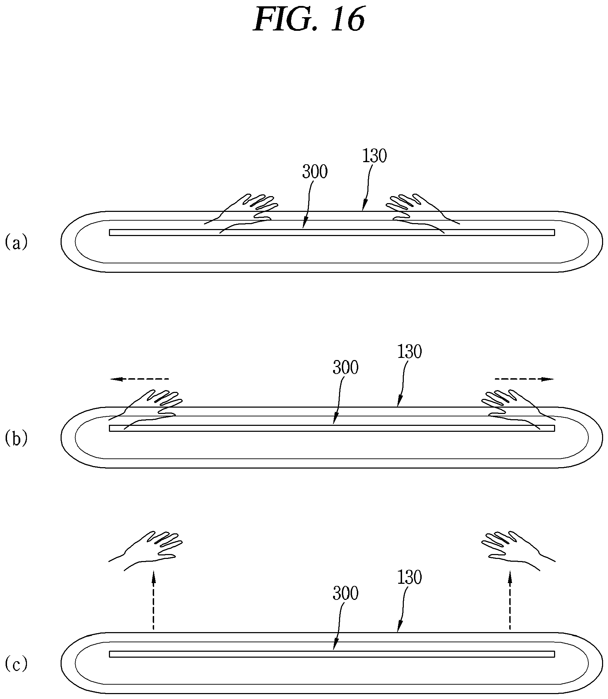

FIG. 16 illustrates an example in which the user inputs motion information for stopping the cart unit 20.

Referring to (a) of FIG. 16, both hands of the user are located at the central part of the handle 130 or the central part of the extension direction of the touch sensor 300. At this time, the handle 130 is gripped by the hands of the user.

Here, the touch information calculation module 430 calculates touch information by using information sensed by the touch sensor 300. In this state, touch information may be calculated that two points of the handle 130 are gripped by the hands of the user.

Accordingly, the operation information calculation module 450 calculates operation information for controlling the motor 230 to be rotated. In this state, the operation information calculation module 450 may also calculate operation information for controlling the brake 240 to be released.

In (b) of FIG. 16, the user is moving his or her both hands away from each other. That is, the user is moving his or her both hands toward opposite ends of the touch sensor 300 in its extension direction.

Accordingly, motion information is calculated that the both hands of the user are moving in a direction away from each other.

In (c) of FIG. 16, the user is moving his or her both hands upward to be away from the handle 130.

Accordingly, touch information calculated by the touch information calculation module 430 is calculated that the handle 130 is not gripped by the hands of the user. Therefore, the operation information calculation module 450 calculates operation information for controlling the brake 240 to inhibit rotation of the main wheel 210.

In addition, as the both hands of the user are moved in a direction away from the handle 130, motion information has been input by the user by moving his or her both hands. The motion information operation module 440 transmits calculated motion information to the operation information calculation module 450, and the operation information operation module 450 compares the motion information with reference motion information.

It will be understood that each of the steps illustrated in FIG. 16 corresponds to the second reference motion information. Accordingly, the operation information calculation module 450 calculates operation information for controlling the brake 240 to be operated.

As the brake 240 inhibits rotation of the main wheel 210, the cart unit 20 may remain stationary.

Thus, the cart unit 20 according to the implementations of the present disclosure may be controlled by various information, such as information regarding a distance between hands of the user and the handle 130, information regarding whether the handle 130 is gripped by the hands of the user, and information regarding changes in the relative position between the user and the handle 130.

This may result in improving user convenience and safety of the baby in the smart stroller 1.

## Claims

1. A cart unit (20), comprising:
a base portion (120);
main wheels (210) rotatably coupled to a lower part of the base portion (120);
a motor (230) connected to the main wheels (210) to rotate the main wheels (210) together with the motor (230);
a vertical portion (110) that extends from an upper part of the base portion (120) in an up-and-down direction;
a handle (130) rotatably coupled to an upper part of the vertical portion (110);
a touch sensor (300) mounted inside the handle (130) to sense information regarding a distance between the handle (130) and an object, or information regarding whether the object is in contact with the handle (130); and
a controller (400) that is electrically connected to the motor (230) and the touch sensor (300), and configured to receive the sensed information, and to calculate operation information regarding rotation of the motor (230) using the received information.

2. The cart unit of claim 1, wherein the handle (130) comprises:
a connection portion (131) rotatably coupled to the vertical portion (110); and
an extended portion (132) that is continuous with the connection portion (131) and extends in one direction,
wherein the touch sensor (300) extends in the one direction in which the extended portion (132) extends and is mounted inside the extended portion (132).

3. The cart unit of claim 2, wherein the touch sensor (300) includes a plurality of sensing regions (320, 321 - 326) disposed along the one direction.

4. The cart unit of claim 2, wherein the touch sensor (300) is located closer to an inner upper part of the extended portion (132) than to any other part of the extended portion (132)..

5. The cart unit of any one of claims 1 to 4, wherein the controller (400) comprises:
a distance information calculation module (420) configured to calculate distance information regarding the distance between the handle (130) and the object; and
a motion information calculation module (440) configured to calculate motion information regarding movement of the object towards the handle (130) or away from the handle (130) by using variations of the calculated distance information.

6. The cart unit of claim 5, wherein the controller (400) further comprises an operation information calculation module (450) configured to calculate operation information regarding operation of the cart unit (20) by using the calculated distance information or the calculated motion information.

7. The cart unit of claim 6, further comprising a brake (240) that inhibits rotation of the main wheels (210),
wherein the controller (400) further comprises a brake control module (470) configured to control the brake (240) using the calculated operation information.

8. The cart unit of claim 7, wherein the operation information calculation module (450) is configured to calculate operation information for controlling the brake (240) to be operated when the distance represented by the calculated distance information is greater than a preset reference distance represented by a preset reference distance information.

9. The cart unit of claim 7, wherein the operation information calculation module (450) is configured to calculate operation information for controlling the brake (240) to be operated or released when a motion represented by the calculated motion information corresponds to a motion represented by a preset reference motion information.

10. The cart unit of any one of claims 1 to 4, wherein the controller (400) comprises:
a touch information calculation module (430) configured to calculate touch information regarding whether the object is in contact with the handle (130); and
an operation information calculation module (450) configured to calculate operation information regarding rotation of the motor (230) by using the calculated touch information.

11. The cart unit of claim 10, wherein the touch information calculation module (430) comprises a contact number information calculation unit (431) configured to calculate information regarding the number of portions where the object is in contact with the handle (130).

12. The cart unit of claim 11, wherein the operation information calculation module (450) is configured to calculate operation information for controlling the motor (230) to be rotated when the calculated contact number information is less than a preset reference contact number information.

13. The cart unit of claim 12, further comprising a brake (240) that inhibits rotation of the main wheels (210),
wherein the controller (400) further comprises a brake control module (470) configured to control the brake (240) using the calculated operation information, and
wherein the operation information calculation module (450) is configured to calculate operation information for controlling the brake (240) to be operated when the calculated contact number information is greater than preset reference contact number information.

14. A method of controlling a cart unit, the method comprising:
(a) sensing (S100), by a touch sensor (300), information regarding a distance between a handle (130) and an object or information regarding whether the object is in contact with the handle (130);
(b) controlling (S200), by a controller (400), operation of the cart unit (20) using the sensed information regarding the distance between the handle (130) and the object;
(c) controlling (S300), by the controller (400), the operation of the cart unit (120) using the sensed information regarding whether the object is in contact with the handle (130).

15. The method of claim 14, wherein the step (a) comprises:
(a1) sensing (S110), by the touch sensor (300), the distance between the handle (130) and the object;
(a2) sensing (S120), by the touch sensor (300), information regarding whether the object is in contact with the handle (130);
(a3) detecting (S130), by the touch sensor (300), a sensing region (320, 321 - 326) in contact with the object among a plurality of sensing regions (320, 321 - 326); and
(a4) transmitting (S140), by the touch sensor (300), information regarding the sensed distance between the handle (130) and the object or information regarding the detected sensing region in contact with the object to the controller (400).
